# EUROPEAN PATENT APPLICATION

(11) **EP 4 328 886 A1**
(43) Date of publication of application: **28.02.2024**
(21) Application number: 22791382.9
(22) Date of filing: 07.03.2022
(51) Int. Cl.: G08G 1/00, G08G 1/09, G01C 21/34, G16Y 10/40, G16Y 40/60

(54) **INFORMATION PROCESSING DEVICE, INFORMATION PROCESSING SYSTEM, AND INFORMATION PROCESSING METHOD**

(30) Priority: 19.04.2021 JP 2021070711
(71) Applicant: Hitachi Astemo, Ltd., Ibaraki 312-8503 (JP)
(72) Inventor: MUTO Yuta, Tokyo 100-8280 (JP); NOMURA Takashi, Tokyo 100-8280 (JP); MORI Naoki, Tokyo 100-8280 (JP)
(74) Representative: MERH-IP Matias Erny Reichl Hoffmann Patentanwälte PartG mbB
(86) International application number: PCT/JP2022/009749
(87) International publication number: WO 2022/224601

(57) **Abstract**

An object of the present invention is to provide a technology for estimating a traveling direction of a lane by using accuracy of external environment information. An information processing device (100) of the present invention includes at least one memory (102 and 103) including a program code and at least one processor (101) configured to execute the program code. The processor is configured to acquire external environment information including at least information regarding a peripheral region of a vehicle, and determine a traveling direction of at least one lane by using a first accuracy (A1) indicating the level of precision of the external environment information.

## Description

### Technical Field

The present disclosure relates to an information processing device, an information processing system, and an information processing method.

### Background Art

Hitherto, in a case where there is a plurality of lanes, an automated driving device or driving assistance device for a vehicle estimates a traveling direction of a lane based on external environment information and determines a lane on which the vehicle can travel (see, for example, PTL 1). Here, the "traveling direction of a lane" is a traveling direction of the vehicle determined in advance for the lane. In other words, the "traveling direction of a lane" is a direction in which a vehicle traveling on the lane should travel.

### Citation List

### Patent Literature

PTL 1: JP 6583697 B2

### Summary of Invention

### Technical Problem

Examples of the external environment information include information regarding an object (for example, another vehicle) and information regarding a plurality of dividing lines that define lanes. Such external environment information is acquired by a sensor (for example, a radar sensor, a camera sensor, or the like) mounted on the vehicle. However, an accuracy (precision) of the external environment information may be low. The device described in PTL 1 estimates the traveling direction of a lane without considering the accuracy of the external environment information. Therefore, the traveling direction of a lane may be erroneously estimated.

Therefore, the present disclosure provides a technology for estimating a traveling direction of a lane by using accuracy of external environment information.

### Solution to Problem

In one or more embodiments, an information processing device is provided. The information processing device includes: at least one memory including a program code and at least one processor configured to execute the program code. The processor is configured to acquire external environment information including at least information regarding a peripheral region of a vehicle, and determine a traveling direction of at least one lane by using a first accuracy indicating a level of precision of the external environment information. The traveling direction of the lane is a traveling direction of the vehicle determined in advance for the lane.

In one or more embodiments, an information processing system is provided. The information processing system includes the information processing device and at least one vehicle. The information processing device is configured to receive external environment information from the at least one vehicle.

In one or more embodiments, an information processing method is provided. The information processing method includes: acquiring external environment information including at least information regarding a peripheral region of a vehicle; and determining a traveling direction of at least one lane by using a first accuracy indicating a level of precision of the external environment information. The traveling direction of the lane is a traveling direction of the vehicle determined in advance for the lane.

### Advantageous Effects of Invention

According to the above configuration, a possibility of erroneously estimating a traveling direction of a lane can be reduced by using accuracy of external environment information. Problems, configurations, and effects other than those described above will become apparent by the following description of embodiments.

### Brief Description of Drawings

[FIG. 1] FIG. 1 is a diagram illustrating a configuration of an information processing system according to a first embodiment.
[FIG. 2] FIG. 2 is a functional block diagram of an information processing device according to the first embodiment.
[FIG. 3] FIG. 3 is a plan view illustrating a situation in which a plurality of vehicles is traveling on a road.
[FIG. 4] FIG. 4 is a diagram illustrating a configuration of a first table according to the first embodiment.
[FIG. 5] FIG. 5 is a diagram illustrating a configuration of a second table according to the first embodiment.
[FIG. 6] FIG. 6 is a flowchart executed by the information processing device according to the first embodiment.
[FIG. 7] FIG. 7 is a diagram illustrating a configuration of a first table according to a second embodiment.
[FIG. 8] FIG. 8 is a flowchart executed by an information processing device according to the second embodiment.
[FIG. 9] FIG. 9 is a flowchart executed by an information processing device according to a third embodiment.
[FIG. 10] FIG. 10 is a diagram illustrating a configuration of an information processing system according to a fourth embodiment.
[FIG. 11] FIG. 11 is a flowchart executed by an information processing device (server) according to the fourth embodiment.

### Description of Embodiments

Hereinafter, a plurality of embodiments will be described with reference to the accompanying drawings. Although the accompanying drawings illustrate specific configurations, they are not used to interpret the technical scope of the present disclosure in a limited manner.

In the following description, a road complies with Japanese traffic regulations, and a vehicle travels on a road of left-hand traffic. The road includes a plurality of dividing lines. One or more lanes are defined by the plurality of dividing lines.

The dividing lines defining the lane include outer lines, a center line, and a lane boundary line. The outer lines are lines at both ends in a road width direction (the outermost sides in the road width direction), and are lines representing a boundary with a shoulder or a sidewalk. The center line is a line for separating traveling directions of the lanes, that is, a line representing a boundary with the opposite lane. Therefore, the traveling direction of the left lane and the traveling direction of the right lane are opposite to each other with the center line interposed therebetween. The lane boundary line is a line representing a boundary between a plurality of lanes in a case where the traveling directions of the lanes are the same as each other.

Further, examples of the type (line type) of the dividing line include a solid line and a broken line. The color (line color) of the dividing line includes white and yellow. The outer line, the center line, and the lane boundary line can be expressed as follows. For example, the outer line is a white solid line. The center line is a white solid line, a yellow solid line, or a white broken line. The lane boundary line is a white broken line. Each of the outer line, the center line, and the lane boundary line may be expressed by a combination other than the above-described line type and line color.

### <First Embodiment>

### (Configuration of Information Processing System)

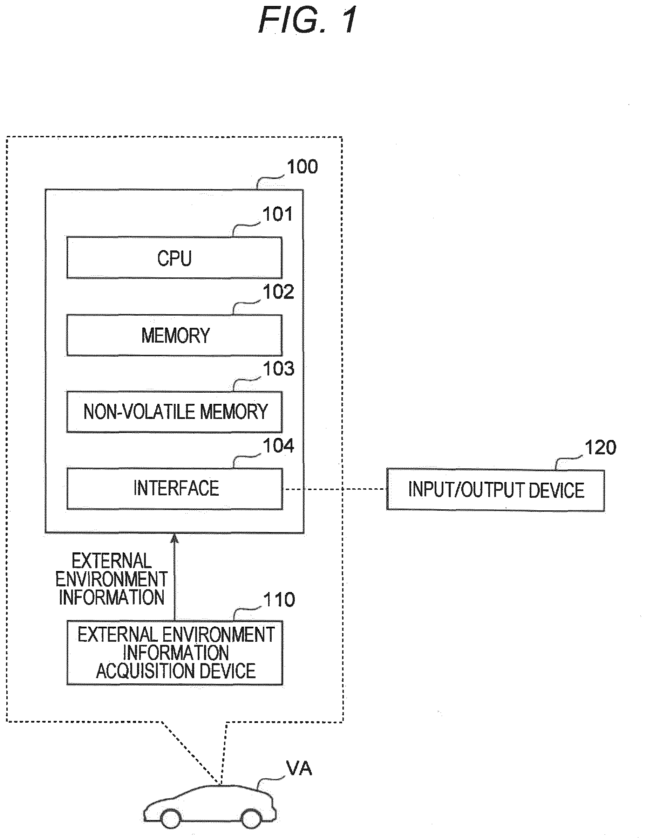

FIG. 1 is a diagram illustrating a configuration of an information processing system according to a first embodiment. The information processing system includes an information processing device 100 and an input/output device 120.

The information processing device 100 is mounted on a vehicle VA. In this example, the information processing device 100 is an ECU. The ECU is an abbreviation of an electronic control unit, and is an electronic control circuit including a microcomputer as a component. The information processing device 100 includes a central processing unit (CPU) 101, a memory 102, a non-volatile memory 103, an interface 104, and the like.

The CPU 101 includes at least one processor and/or circuit. The memory 102 includes, for example, a random access memory (RAM). The non-volatile memory 103 includes, for example, a flash memory and a read only memory (ROM). The CPU 101 executes a program code (instruction) stored in the non-volatile memory 103 by using the memory 102 as a work memory. As a result, the CPU 101 can execute processing described below.

The input/output device 120 is a personal computer (PC), a tablet terminal, a smartphone, or the like. The input/output device 120 can be connected to the information processing device 100 via the interface 104. The input/output device 120 can read information stored in the non-volatile memory 103, write information in the non-volatile memory 103, and update information stored in the non-volatile memory 103.

The vehicle VA includes an external environment information acquisition device 110. The external environment information acquisition device 110 is a device that acquires external environment information. The information processing device 100 acquires the external environment information from the external environment information acquisition device 110.

The external environment information includes at least information regarding a peripheral region of the vehicle VA. The external environment information includes, for example, object information regarding an object present in the peripheral region of the vehicle VA, dividing line information regarding dividing lines present in the peripheral region of the vehicle VA, and the like. The "object" includes a moving object such as a pedestrian, a four-wheeled vehicle, or a two-wheeled vehicle, and a stationary object such as a guard rail or a fence.

The object information includes, for example, a distance between the vehicle VA and the object, a movement direction of the object with respect to the vehicle VA, an azimuth of the object with respect to the vehicle VA, a relative speed between the vehicle VA and the object, the type of the object (for example, information indicating whether the object is a moving object or a stationary object), and the like. The dividing line information includes positions of a plurality of dividing lines defining a lane, the type (line type) of the dividing line, the color (line color) of the dividing line, and the like. The external environment information is not limited to the above-described example, and may include other information as long as it is used for estimating the traveling direction of a lane.

For example, the external environment information acquisition device 110 includes at least one of a radar sensor, a camera sensor, or a communication device. The external environment information acquisition device 110 is not limited to the above-described example, and may include other devices.

The radar sensor emits a beam to the peripheral region of the vehicle VA. The radar sensor can acquire the object information based on information regarding a reflected wave of the beam.

The camera sensor images the peripheral region of the vehicle VA to acquire image data. The camera sensor can execute image recognition processing on the image data to acquire the object information and the dividing line information.

The communication device includes a transmission unit and a reception unit. The communication device can communicate with a device outside the vehicle VA by using a vehicle-to-X (V2X) technology. V2X includes vehicle-to-vehicle (V2V), vehicle-to-infrastructure (V2I), vehicle-to-people (V2P), and vehicle-to-network (V2N). Therefore, the communication device can acquire the external environment information from at least one of another vehicle, an infrastructure facility, a terminal carried by a human, or a network via wireless communication.

### (Configuration of Information Processing Device)

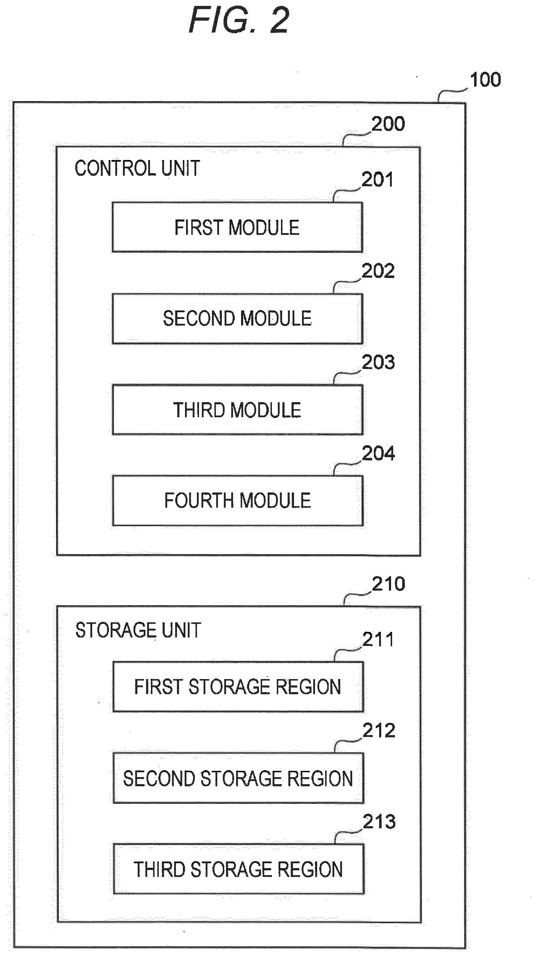

FIG. 2 is a functional block diagram of the information processing device 100. The information processing device 100 includes a control unit 200 and a storage unit 210 as functional components.

The control unit 200 includes a first module 201, a second module 202, a third module 203, and a fourth module 204. These modules 201 to 204 are implemented by the CPU 101 executing the program code stored in the non-volatile memory 103.

The storage unit 210 includes a first storage region 211, a second storage region 212, and a third storage region 213. These storage regions 211 to 213 are implemented by one or both of the memory 102 and the non-volatile memory 103.

The first module 201 determines accuracy of the external environment information. Hereinafter, the "accuracy of the external environment information" is referred to as "first accuracy A1". The first accuracy A1 indicates the level of precision (exactness) of the external environment information. In other words, the first accuracy A1 indicates the level of reliability of the external environment information. Therefore, the higher the first accuracy A1, the higher the precision of the external environment information corresponding to the first accuracy A1. In this example, the first accuracy A1 is determined to be a value in a range of 0 to 100.

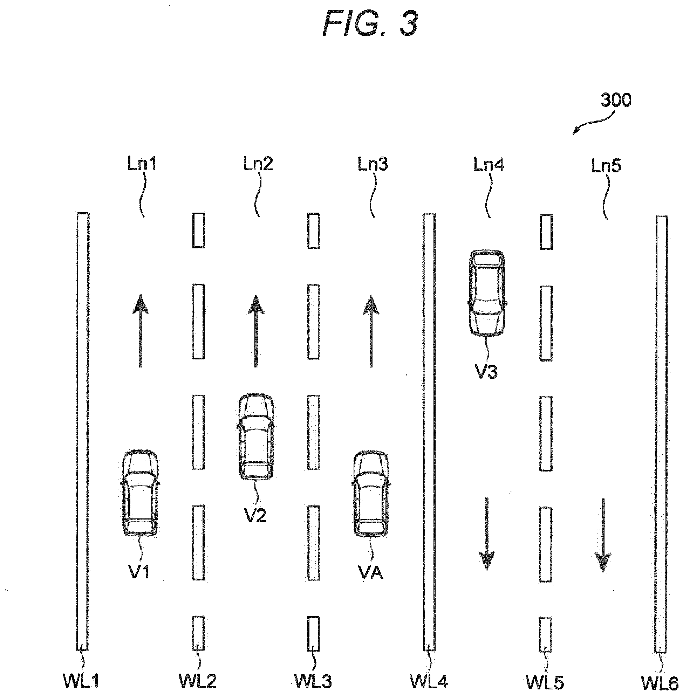

FIG. 3 illustrates a situation in which a plurality of vehicles is traveling on a road 300. The road 300 includes five lanes Ln1 to Ln5. The five lanes Ln1 to Ln5 are defined by six dividing lines (white lines) WL1 to WL6. The dividing line WL4 is the center line. As indicated by the arrows, the traveling direction of the lanes Ln1 to Ln3 on the left side with respect to the dividing line WL4 is an "upward direction" in the drawing, and the traveling direction of the lanes Ln4 and Ln5 on the right side with respect to the dividing line WL4 is a "downward direction" in the drawing.

The vehicle VA on which the information processing device 100 is mounted is traveling in the lane Ln3. A first other vehicle V1 is traveling in the lane Ln1, and a second other vehicle V2 is traveling in the lane Ln2. Further, a third other vehicle V3 is traveling in the lane Ln4.

In the situation of FIG. 3, the first module 201 acquires the external environment information from the external environment information acquisition device 110. The first module 201 creates a first table from the external environment information. The first table includes various types of information used to estimate the traveling direction of each of the lanes Ln1 to Ln5. The first module 201 stores the created first table in the first storage region 211.

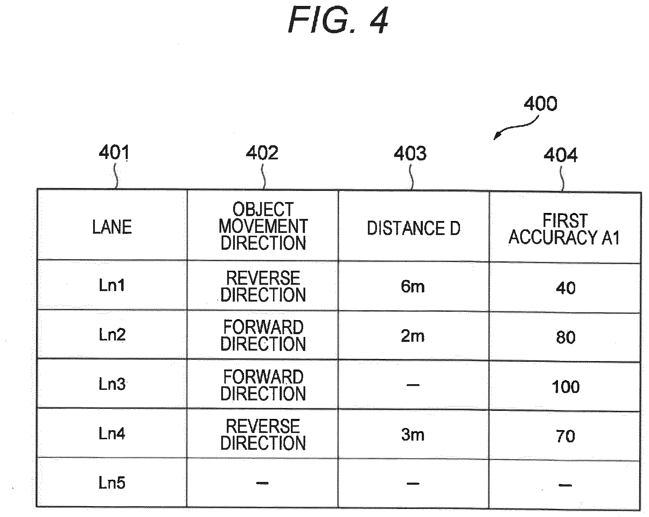

FIG. 4 illustrates an example of a first table 400. The first table 400 includes, as constituent items, a lane 401, an object movement direction 402, a distance (D) 403, and a first accuracy (A1) 404. The lane 401 is an identifier for uniquely identifying each lane included in the road 300. The first module 201 detects the dividing lines WL1 to WL6 based on the external environment information (specifically, the dividing line information). The first module 201 defines a plurality of lanes on the assumption that.one lane exists between adjacent dividing lines. For example, the first module 201 defines the lane Ln1 between the dividing line WL1 and the dividing line WL2. The first module 201 defines the lanes Ln1 to Ln5 based on the dividing lines WL1 to WL6 by such processing. The first module 201 assigns an identifier to each of the lanes Ln1 to Ln5. In this example, reference signs Ln1 to Ln5 assigned to the respective lanes in FIG. 3 are used as the lane 401.

The object movement direction 402 indicates a movement direction of an object moving in each of the lanes Ln1 to Ln5. In this example, the object movement direction 402 is used to estimate the traveling direction of each of the lanes Ln1 to Ln5. The first module 201 detects other vehicles V1 to V3 as the objects from the external environment information (specifically, the object information), and detects the movement direction of each of the other vehicles V1 to V3. Then, the first module 201 associates the respective positions of the vehicles (VA and V1 to V3) with the lanes Ln1 to Ln5. For example, the first module 201 associates the position of the first other vehicle V1 with the lane Ln1, and determines that the first other vehicle V1 is traveling in the lane Ln1.

The object movement direction 402 is expressed as either a "forward direction" or a "reverse direction" based on the movement direction of the vehicle VA. The forward direction represents the same direction as the current movement direction of the vehicle VA. The reverse direction represents a direction opposite to the current movement direction of the vehicle VA.

The object movement direction 402 is not limited to this example. The object movement direction 402 may be expressed by an azimuth angle θ. For the azimuth angle θ, the north direction is defined as 0°. The azimuth angle θ increases clockwise. The east direction is 90°, the south direction is 180°, and the west direction is 270°.

The distance D is a distance between the vehicle VA and the object. The first module 201 can acquire the distance D from the external environment information (specifically, the object information). The distance D is used for calculating the first accuracy A1.

The first module 201 calculates the first accuracy A1 of the object movement direction 402 based on the distance D. This is because it is considered that the larger the distance D, the lower the precision of the external environment information (recognition precision of the radar sensor, the camera sensor, or the like) is. Accordingly, the first module 201 decreases the first accuracy A1 as the distance D increases.

For example, the first accuracy A1 is defined by a function f(D) = 100 - 10 × D depending on the distance D. The first module 201 may calculate the first accuracy A1 by substituting the distance D into the function f(D).

Since the vehicle VA is traveling in the lane Ln3, the object (that is, the vehicle VA). movement direction 402 corresponding to the lane Ln3 is correct. Therefore, the first module 201 sets the first accuracy A1 of the object movement direction 402 corresponding to the lane Ln3 to "100". Further, there is no object in the lane Ln5. In this case, "the object movement direction 402, the distance (D) 403, and the first accuracy (A1) 404" corresponding to the lane Ln5 are set to null.

A method of calculating the first accuracy A1 is not limited to the above example. The first module 201 may calculate the first accuracy A1 based on a characteristic of the external environment information acquisition device 110. As a factor that determines the characteristic of the external environment information acquisition device 110, for example, a variable determined by an internal processing logic of the external environment information acquisition device 110 may be used. Examples of such a variable include an object existence probability output by artificial intelligence (AI) that recognizes an object based on an image from the camera sensor.

The second module 202 acquires the first table 400 from the first storage region 211. The second module 202 creates a second table from the first table 400. The second table includes information regarding the traveling direction of each of the lanes Ln1 to Ln5. The second module 202 stores the second table in the second storage region 212.

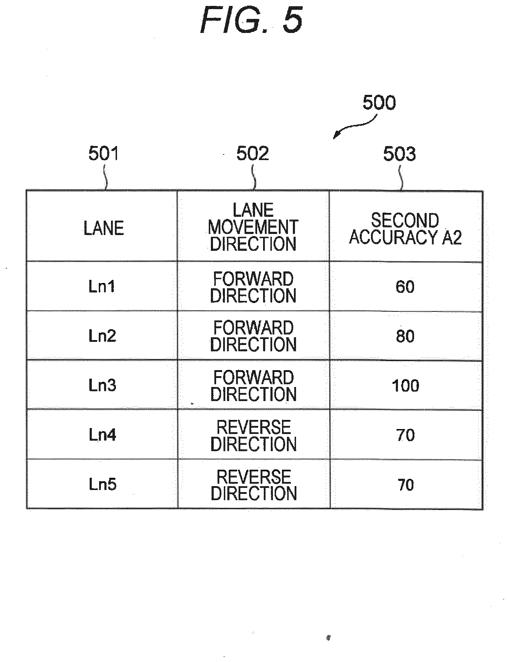

FIG. 5 illustrates an example of the second table 500. The second table 500 includes, as constituent items, a lane 501, a lane traveling direction 502, and a second accuracy (A2) 503. The lane 501 is the same as the lane 401 of the first table 400. In this example, the lane traveling direction 502 is expressed as either the "forward direction" or the "reverse direction" as described above. The lane traveling direction 502 is not limited to this example. The lane traveling direction 502 may be expressed by an azimuth angle θ. The second accuracy A2 indicates the level of precision (exactness) of the lane traveling direction 502. In other words, the second accuracy A2 indicates the level of reliability of the lane traveling direction 502. Therefore, the higher the second accuracy A2, the higher the precision of the lane traveling direction corresponding to the second accuracy A2. In this example, the second accuracy A2 is determined to be a value in a range of 0 to 100.

The second module 202 determines (estimates) the lane traveling direction 502 of each of the lanes Ln1 to Ln5 based on the first table 400.

First, the second module 202 determines the lane traveling direction 502 by using the object movement direction 402 corresponding to the highest first accuracy A1 in the first table 400. In the first table 400, the first accuracy A1 of the object movement direction 402 corresponding to the lane Ln3 is "100 (that is, the maximum value)". In such a case, the second module 202 adopts the object movement direction 402 as it is as the traveling direction 502 of the lane Ln3. That is, the second module 202 determines the "forward direction" as the traveling direction 502 of the lane Ln3. In this manner, the second module 202 determines the traveling direction 502 of the lane Ln3 having the highest first accuracy A1.

Next, the second module 202 determines whether or not the traveling directions 502 of the lanes other than the lane Ln3 are inconsistent with the traveling direction 502 of the lane Ln3 as a reference. For example, in the first table 400, the object movement direction 402 corresponding to the lane Ln1 is the "reverse direction". The lane Ln1 is present on the left side of the lane Ln3. Considering that the road 300 is a road of left-hand traffic, the object movement direction 402 corresponding to the lane Ln1 is inconsistent. In such a case, the second module 202 determines the "forward direction" as the traveling direction 502 of the lane Ln1 instead of the "reverse direction".

On the other hand, the object movement direction 402 corresponding to the lane Ln2 and the object movement direction 402 corresponding to the lane Ln4 are not inconsistent with the traveling direction 502 of the lane Ln3. Therefore, the second module 202 determines the "forward direction" as the traveling direction 502 of the lane Ln2 and determines the "reverse direction" as the traveling direction 502 of the lane Ln4.

Further, the second module 202 may determine the traveling direction 502 of the lane Ln5 as follows. In the first table 400, the object movement direction 402 corresponding to the lane Ln5 is null. In such a case, the second module 202 adopts the traveling direction 502 of the lane Ln4 closest to the lane Ln5 as the traveling direction 502 of the lane Ln5. That is, the second module 202 determines the "reverse direction" as the traveling direction 502 of the lane Ln5.

Next, the second module 202 calculates the second accuracy A2 for each of the lanes Ln1 to Ln5. The second module 202 calculates the second accuracy A2 based on the first accuracy A1. Regarding the lane Ln1, since the object movement direction 402 is corrected as described above, it is considered that the accuracy of the lane traveling direction 502 is low. Therefore, the second accuracy A2 corresponding to the lane Ln1 may be calculated by the following equation (A2 = 100 - A1). Therefore, the second module 202 sets the second accuracy A2 corresponding to the lane Ln1 to "60".

For the lanes Ln2, Ln3, and Ln4, the object movement direction 402 is adopted as the lane traveling direction 502 without being corrected. In this case, the second module 202 sets the first accuracy A1 as the second accuracy A2 as it is. The second module 202 sets the second accuracy A2 corresponding to the lane Ln2 to "80", sets the second accuracy A2 corresponding to the lane Ln3 to "100", and sets the second accuracy A2 corresponding to the lane Ln4 to "70".

In the first table 400, the first accuracy A1 corresponding to the lane Ln5 is null. In such a case, the second module 202 adopts the first accuracy A1 of the lane Ln4 closest to the lane Ln5 as the second accuracy A2 of the lane Ln5. That is, the second module 202 sets the second accuracy A2 of the lane Ln5 to "70".

The third module 203 determines (estimates) a travelable region based on the lane traveling direction 502 of the second table 500. The travelable region means a region where the vehicle VA can travel (enter). The third module 203 stores information regarding the travelable region in the third storage region 213.

The travelable region may be expressed by position information of a lane and a traveling direction of the lane. The position information of the lane may be expressed by a point sequence of lane center positions. The point sequence is expressed by a combination of latitude, longitude, and altitude.

The third module 203 determines, as the travelable region, a lane whose traveling direction 502 is the same as the traveling direction 502 of the lane Ln3 in which the vehicle VA is traveling based on the second table 500. The third module 203 determines the lanes Ln1, Ln2, and Ln3 as the travelable regions.

The third module 203 may determine the travelable region based on the second accuracy A2. For example, the third module 203 may determine a lane of which the second accuracy A2 is equal to or higher than a predetermined value (for example, 70) as the travelable region. In this configuration, the third module 203 determines the lanes Ln2 and Ln3 as the travelable regions. Since a lane of which the second accuracy A2 is low is not treated as the travelable region, it is possible to prevent the vehicle VA from entering a lane with a risk.

The fourth module 204 compares information regarding the travelable region determined at the current time point with information regarding the (past) travelable region stored in the third storage region 213, and updates the information regarding the travelable region stored in the third storage region 213.

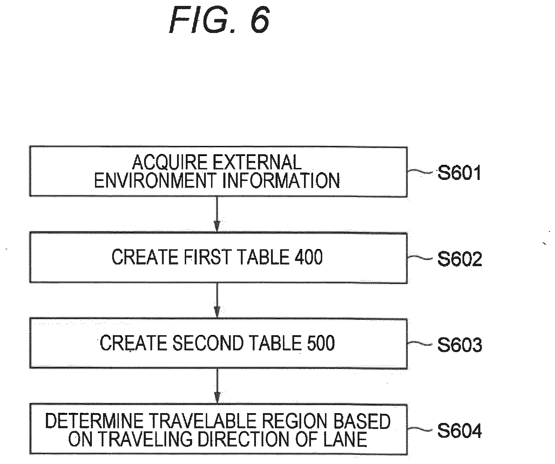

FIG. 6 is a flowchart illustrating a routine executed by the information processing device 100 according to the first embodiment. The information processing device 100 repeatedly executes the routine of FIG. 6 at a predetermined cycle.

In the following description, the modules 201 to 204 of the control unit 200 are described as subjects, but since a subject that executes these modules is the CPU 101, the subjects may be replaced with the CPU 101.

The first module 201 acquires the external environment information from the external environment information acquisition device 110 (S601). Then, the first module 201 creates the first table 400 as described above based on the external environment information (S602). The first module 201 stores the first table 400 in the first storage region 211.

Next, the second module 202 acquires the first table 400 from the first storage region 211. Then, the second module 202 creates the second table 500 as described above based on the first table 400 (S603). The second module 202 stores the second table 500 in the second storage region 212.

Next, the third module 203 acquires the second table 500 from the second storage region 212. Then, the third module 203 determines the travelable region as described above based on the second table 500 (S604).. The third module 203 stores information regarding the travelable region in the third storage region 213. In a case where the information regarding the travelable region already exists in the third storage region 213, the fourth module 204 compares information regarding the travelable region determined at the current time point with information regarding the (past) travelable region stored in the third storage region 213, and updates the information regarding the travelable region stored in the third storage region 213.

### (Effects)

According to the above configuration, the information processing device 100 acquires the external environment information from the external environment information acquisition device 110, and determines the traveling direction of at least one lane existing in the peripheral region of the vehicle VA by using the first accuracy A1 indicating the level of precision of the external environment information. The information processing device 100 can prevent the external environment information with the low first accuracy A1 from being reflected in the determination of the traveling direction of the lane. Therefore, a possibility of erroneously estimating the traveling direction of the lane can be reduced.

Furthermore, the information processing device 100 determines the first accuracy A1 for the object movement direction 402, and determines the traveling direction of the lane by using the object movement direction 402 and the first accuracy A1. The movement direction of the object traveling on the lane is likely to coincide with the traveling direction of the lane. The information processing device 100 can determine the traveling direction of the lane with high precision by using the movement direction of the object.

Furthermore, the information processing device 100 calculates the second accuracy A2 indicating the level of precision of the traveling direction of the lane by using the first accuracy A1, and determines the travelable region by using the second accuracy A2. Since a lane of which the second accuracy A2 is low is not treated as the travelable region, it is possible to prevent the vehicle VA from entering a lane with a risk. Accordingly, high safety can be ensured.

### (Modified Example)

The second module 202 may determine the traveling direction of the lane as follows. In a case where the first accuracy A1 of the object movement direction 402 is equal to or lower than a predetermined threshold Ath, the second module 202 determines the "reverse direction" as the traveling direction of the lane.. As a result, a lane of which the first accuracy A1 is low is not treated as the travelable region. It is possible to prevent the vehicle VA from entering the lane with a risk. In a case where the first accuracy A1 of the object movement direction 402 is higher than the predetermined threshold Ath, the second module 202 may directly determine the object movement direction 402 as the traveling direction of the lane.

The configuration of FIG. 1 merely illustrates a logical configuration, and there is no restriction on a physical configuration. For example, the information processing device 100 may be mounted in the external environment information acquisition device 110. That is, the information processing device 100 may be mounted in an in-vehicle sensor (for example, a radar sensor or a camera sensor).

The lane traveling direction 502 may include "dual direction". An example of a lane determined to be a "dual direction" lane includes a lane (road) in which a plurality of vehicles pass each other in one lane. Even in a case where only one lane can be detected based on the external environment information, the first module 201 may virtually set a plurality of lanes in the one lane according to a lane width.

The lane is not limited to a range sandwiched between two dividing lines. The lane may be a range sandwiched between the dividing line and a three-dimensional object (a curbstone, a guard rail, a fence, or the like).

The second accuracy (A2) 503 of the second table 500 may be omitted. In this case, the third module 203 determines, as the travelable region, a lane whose traveling direction 502 is the same as the traveling direction 502 of the lane Ln3 in which the vehicle VA is traveling.

The control unit 200 may further include a module that performs driving assistance control (or automated driving control) for assisting a part of or the entire driving operation of the vehicle VA. The control unit 200 may acquire the travelable region from the third storage region 213 and perform the driving assistance control based on the travelable region.

### <Second Embodiment>

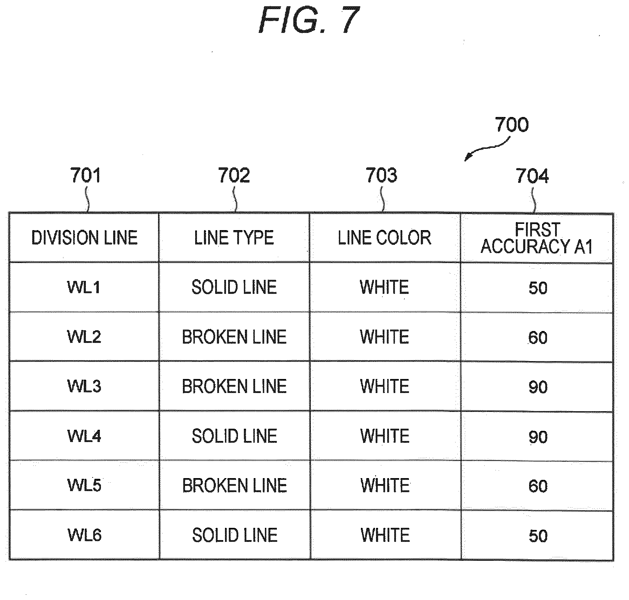

A configuration of a second embodiment will be described by using the situation of FIG. 3. A first module 201 acquires external environment information from an external environment information acquisition device 110. Then, the first module 201 creates a first table 700 illustrated in FIG. 7 from the external environment information and stores the first table 700 in a first storage region 211.

The first table 700 includes, as constituent items, a dividing line 701, a line type 702, a line color 703, and a first accuracy (A1) 704. The dividing line 701 is an identifier for uniquely identifying a dividing line included in a road 300 on which a vehicle VA is traveling. The first module 201 detects the dividing lines WL1 to WL6 based on the external environment information (specifically, the dividing line information). The first module 201 assigns an identifier to each of the dividing lines WL1 to WL6. In this example, reference signs WL1 to WL6 assigned to the respective dividing lines in FIG. 3 are used as the dividing line 701.

The line type 702 is information indicating the type of the dividing line, and is either a solid line or a broken line in this example. The line color 703 is information indicating the color of the dividing line, and is either white or yellow in this example. The first accuracy A1 indicates the level of precision (exactness) of a "combination of the line type 702 and the line color 703". In other words, the first accuracy A1 indicates the level of reliability of the "combination of the line type 702 and the line color 703". As described above, the first accuracy A1 is determined to be a value in a range of 0 to 100. The first accuracy A1 may be an evaluation value of the image recognition processing output by AI.

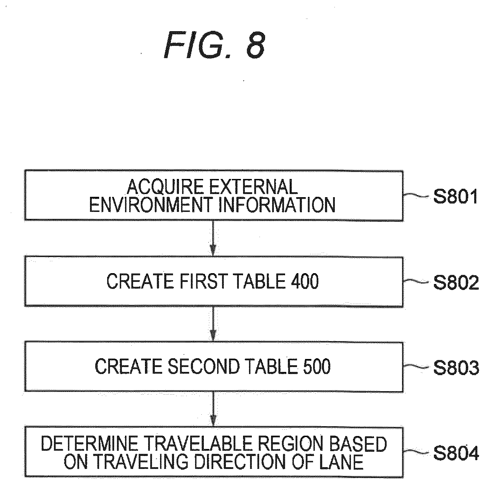

FIG. 8 is a flowchart illustrating a routine executed by an information processing device 100 according to the second embodiment. The information processing device 100 repeatedly executes a routine of FIG. 8 at a predetermined cycle.

The first module 201 acquires the external environment information from the external environment information acquisition device 110 (S801). Then, the first module 201 creates the first table 700 based on the external environment information (S802). The first module 201 stores the first table 700 in the first storage region 211.

Next, a second module 202 acquires the first table 700 from the first storage region 211. Then, the second module 202 creates a second table 500 based on the first table 700 (S803). The second module 202 stores the second table 500 in the second storage region 212.

Specifically, the second module 202 defines lanes Ln1 to Ln5 based on the first table 700. As described above, the second module 202 defines the lanes Ln1 to Ln5 on the assumption that one lane exists between adjacent dividing lines. Through such processing, the second module 202 can also acquire the number LN of lanes. The second module 202 switches processing of determining a traveling direction of a lane according to the number LN of lanes. In this example, the number LN of lanes is divided into the following cases (a) to (c).
(a) Number LN of lanes ≥ 3
(b) Number LN of lanes = 2
(c) Number LN of lanes = 1

In the example of FIG. 3, the number LN of lanes is "5". Therefore, the example of FIG. 3 corresponds to (a) described above. In this case, the second module 202 determines the traveling direction of each of the lanes Ln1 to Ln5 as follows. The second module 202 extracts a dividing line whose line type 702 is "solid line" other than the dividing lines WL1 and WL6 corresponding to outer lines. In the first table 700, the line type 702 of the dividing line WL4 is "solid line". In Japanese traffic regulations, a white solid line is likely to be a center line. Accordingly, the second module 202 determines that the dividing line WL4 is the center line. The second module 202 determines the traveling direction of each of the lanes Ln1 to Ln5 based on a relationship between a lane on which the vehicle VA is traveling and the center line. The vehicle VA is traveling in the lane Ln3, and the dividing line WL4 is the center line. Therefore, the second module 202 determines a "forward direction" as the traveling direction of each of the lanes Ln1 to Ln3 on the left side of the dividing line WL4. On the other hand, the second module 202 determines a "reverse direction" as the traveling direction of each of the lanes Ln4 to Ln5 on the right side of the dividing line WL4.

In a case where the number LN of lanes is "2" as in (b) described above, the second module 202 determines the "forward direction" as the traveling direction of the lane on which the vehicle VA is traveling, and determines the "reverse direction" as the traveling direction of the lane on which the vehicle VA is not traveling.

In a case where the number LN of lanes is "1" as in (c) described above, the second module 202 determines the "forward direction" as the traveling direction of the lane.

Next, the third module 203 acquires the second table 500 from the second storage region 212. Then, the third module 203 determines a travelable region as described above based on the second table 500 (S804). The third module 203 stores information regarding the travelable region in the third storage region 213.

### (Effects)

According to the above configuration, the information processing device 100 determines the traveling direction of the lane by using the dividing line information. Specifically, the information processing device 100 determines the traveling direction of the lane by using the line type 702, the line color 703, and the number of lanes. The information processing device 100 can determine the traveling direction of the lane even in a case where there is no object (another vehicle) on the lane. Furthermore, the information processing device 100 can determine the traveling direction of the lane in accordance with the traffic regulations.

### (Modified Example)

The second module 202 may determine the traveling direction of the lane by using at least one of the line type 702, the line color 703, or the number of lanes.

The second module 202 may determine the center line based on the line color 703. In Japanese traffic regulations, a yellow dividing line is likely to be the center line. Accordingly, in a case where there is only one dividing line whose line color 703 is "yellow", the second module 202 may determine that the dividing line is the center line. Then, the second module 202 determines the traveling direction of each lane based on a relationship between a lane on which the vehicle VA is traveling and the center line.

In a case where the center line cannot be determined using the line type 702 and/or the line color 703, the information processing device 100 may determine the traveling direction of the lane according to the traffic regulations. The information processing device 100 may determine the "forward direction" as the traveling direction of the lane on the left side of the vehicle VA, and may determine the "reverse direction" as the traveling direction of the lane on the right side of the vehicle VA.

In the first table 700, the first accuracy A1 may be determined for each of the line type 702 and the line color 703. Furthermore, in the first table 700, the first accuracy (A1) 704 may be omitted.

### <Third Embodiment>

In a third embodiment, external environment information further includes at least one of information regarding a time when the external environment information is acquired (hereinafter, referred to as "time information") or information regarding weather (hereinafter, referred to as "weather information"). The time information may be, for example, ON/OFF information of a headlight. The weather information may be, for example, ON/OFF information of a wiper.

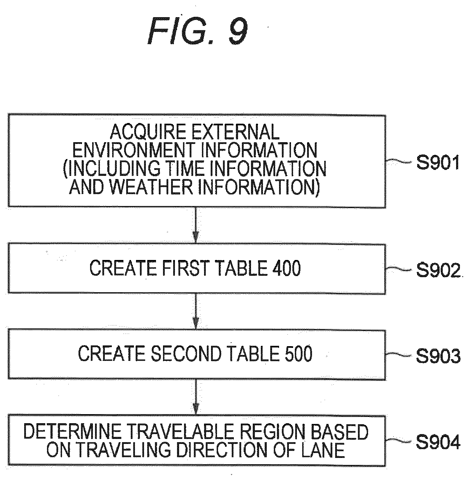

FIG. 9 is a flowchart illustrating a routine executed by an information processing device 100 according to the third embodiment. The information processing device 100 repeatedly executes the routine of FIG. 9 at a predetermined cycle.

A first module 201 acquires the external environment information from an external environment information acquisition device 110 (S901). The external environment information includes the time information and the weather information as described above. Then, the first module 201 creates a first table 400 based on the external environment information (S902). The first module 201 stores the first table 400 in the first storage region 211.

Specifically, there is a high possibility that precision of an in-vehicle sensor such as a radar sensor or a camera sensor decreases at night. Therefore, when the headlight is turned on, the first module 201 decreases a value of a first accuracy (A1) 404 in the first table 400 by a predetermined first value. Similarly, the precision of the in-vehicle sensor is likely to decrease in rainy weather. Therefore, when the wiper is turned on, the first module 201 decreases the value of the first accuracy (A1) 404 in the first table 400 by a predetermined second value.

Next, the second module 202 acquires the first table 400 from the first storage region 211. Then, the second module 202 creates a second table 500 as described above based on the first table 400 (S903). The second module 202 stores the second table 500 in the second storage region 212.

Next, the third module 203 acquires the second table 500 from the second storage region 212. Then, the third module 203 determines a travelable region as described above based on the second table 500 (S904). The third module 203 stores information regarding the travelable region in the third storage region 213.

### (Effects)

According to the above configuration, the information processing device 100 determines the first accuracy A1 by using at least one of the time information or the weather information. The information processing device 100 can reflect conditions such as nighttime and rainy weather in the first accuracy A1. As a result, precision of a traveling direction of a lane finally determined can be improved.

### (Modified Example)

The configuration of the second embodiment may be applied to the present embodiment. That is, the information processing device 100 may determine the traveling direction of the lane by using at least one of a line type 702, a line color 703, or the number of lanes. The information processing device 100 may change the first accuracy A1 (704) of the first table 700 by using at least one of the time information or the weather information.

### <Fourth Embodiment>

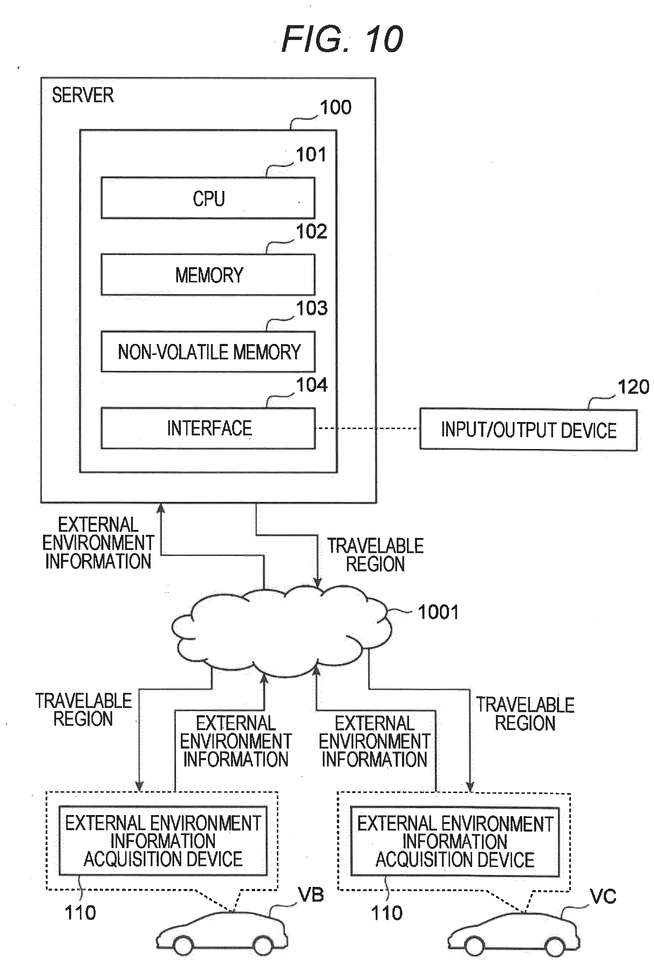

FIG. 10 is a diagram illustrating an entire information processing system according to a fourth embodiment. In the present embodiment, an information processing device 100 is implemented as a server in a data center.

The information processing device 100 is connected to a plurality of vehicles VB and VC via a communication network 1001. The communication network 1001 is, for example, one of a mobile phone network, an Internet network, and near field communication, or a combination of two or more thereof.

Each of the plurality of vehicles VB and VC includes an external environment information acquisition device 110. The external environment information acquisition device 110 includes a communication device as described above, and transmits external environment information to the information processing device 100 via the communication device. The information processing device 100 receives the external environment information from the plurality of vehicles VB and VC. As described above, the information processing device 100 determines a traveling direction of a lane and determines a travelable region. The information processing device 100 transmits information regarding the travelable region to each of the plurality of vehicles VB and VC. Each of the plurality of vehicles VB and VC receives the information regarding the travelable region. Each of the plurality of vehicles VB and VC may perform driving assistance control based on the travelable region.

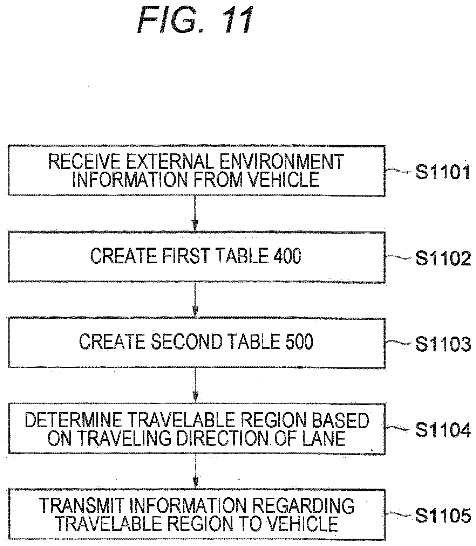

FIG. 11 is a flowchart illustrating a routine executed by the information processing device 100 according to the fourth embodiment. The information processing device 100 repeatedly executes the routine of FIG. 11 at a predetermined cycle.

Each of the plurality of vehicles VB and VC acquires the external environment information from the external environment information acquisition device 110. Each of the plurality of vehicles VB and VC transmits the external environment information to the information processing device 100 via the communication network 1001. The first module 201 receives the external environment information (S1101).

The external environment information may include information acquired by different sensors of the same vehicle and/or information of different times acquired by the same sensor.

The first module 201 creates a first table 400 based on the external environment information (S1102). The first module 201 stores the first table 400 in the first storage region 211.

Next, the second module 202 acquires the first table 400 from the first storage region 211. Then, the second module 202 creates a second table 500 as described above based on the first table 400 (S1103). The second module 202 stores the second table 500 in the second storage region 212.

When receiving the external environment information from each of the plurality of vehicles VB and VC, the second module 202 may calculate a first accuracy A1 based on a mounting position, a mounting angle, performance, and the like of an in-vehicle sensor. For example, in a case where the external environment information is received from a vehicle including an in-vehicle sensor with low performance, the second module 202 may decrease the first accuracy A1 of the external environment information acquired from the vehicle.

Next, the third module 203 acquires the second table 500 from the second storage region 212. Then, the third module 203 determines the travelable region as described above based on the second table 500 (S1104). The third module 203 stores information regarding the travelable region in the third storage region 213.

Next, the third module 203 acquires the information regarding the travelable region from the third storage region 213. Then, the third module 203 transmits the information regarding the travelable region to each of the plurality of vehicles VB and VC (S1105). The information regarding the travelable region may be transmitted in a map format such as a map of a navigation system or a high precision map. Each of the plurality of vehicles VB and VC may integrate (merge) the received information regarding the travelable region and the external environment information acquired by the vehicle itself.

### (Effects)

According to the above configuration, the information processing device 100 acquires the external environment information from the plurality of vehicles VB and VC. Since the information processing device 100 can acquire a wide range of external environment information from many vehicles, it is possible to accurately determine the traveling direction of the lane and the travelable region.

For example, there may be a situation in which the vehicle VB can acquire the external environment information but the vehicle VC cannot acquire the external environment information. Even in such a situation, the information processing device 100 can determine the travelable region based on the external environment information acquired from the vehicle VB, and transmit the information regarding the travelable region to the vehicle VC. The information processing device 100 can also provide the information regarding the travelable region to the vehicle VC that cannot acquire the external environment information.

### (Modified Example)

The information processing device 100 implemented as a server may be implemented by one or a combination of the "first to third embodiments" described above. For example, the information processing device 100 may create the first table 700 based on the external environment information. The information processing device 100 may determine the first accuracy A1 by using at least one of time information or weather information.

The embodiments described above are merely examples, and the scope of the technical idea of the present disclosure is not limited to the above-described configurations. Other aspects conceivable within the scope of the technical idea of the present disclosure also fall within the scope of the present disclosure.

The above-described first to fourth embodiments and modified examples thereof are also applicable to roads complying with traffic regulations of countries or regions other than Japan. For example, the above-described first to fourth embodiments and modified examples thereof are also applicable to a country or a region of right-hand traffic.

The above-described configurations may be implemented by a non-transitory computer readable medium in which a program code is recorded. The information processing device 100 (or the CPU 101) may be configured to read the program code stored in the non-transitory computer-readable medium and execute the program code. As the non-transitory computer-readable medium, for example, a flexible disk, a CD-ROM, a DVD-ROM, a hard disk, an optical disk, a magnetooptical disk, a CD-R, a magnetic tape, a non-volatile memory card, a ROM, or the like is used.

Furthermore, the program code may be supplied to the information processing device 100 via a wired communication path such as an electric wire or an optical fiber, or a wireless communication path.

Although the embodiments of the present invention have been described in detail above, the present invention is not limited to the above embodiments, and various design changes can be made without departing from the spirit of the present invention described in the claims. For example, the above-described embodiments have been described in detail in order to explain the present invention in an easy-to-understand manner, and the present invention is not necessarily limited to those having all the configurations described. Further, a part of a configuration of an embodiment can be replaced with a configuration of another embodiment, and to a configuration of an embodiment, a configuration of another embodiment can be added. In addition, a part of the configuration of each embodiment can be added with another configuration, can be deleted, and can be replaced with another configuration.

### Reference Signs List

- 100: information processing device
- 110: external environment information acquisition device
- 120: input/output device
- 200: control unit
- 210: storage unit

## Claims

1. An information processing device comprising:
at least one memory including a program code; and
at least one processor configured to execute the program code,
wherein the processor is configured to
acquire external environment information including at least information regarding a peripheral region of a vehicle, and
determine a traveling direction of at least one lane by using a first accuracy indicating a level of precision of the external environment information, and
the traveling direction of the lane is a traveling direction of the vehicle determined in advance for the lane.

2. The information processing device according to claim 1,
wherein the external environment information includes a movement direction of an object traveling on the lane, and
the processor is configured to
determine the first accuracy for the movement direction of the object and determine the traveling direction of the lane by using the movement direction of the object and the first accuracy.

3. The information processing device according to claim 1,
wherein the external environment information includes dividing line information regarding a dividing line defining the lane,
the processor is configured to determine the traveling direction of the lane by using the dividing line information, and
the dividing line information includes at least one of a type of the dividing line, a color of the dividing line, or the number of lanes defined by the dividing line.

4. The information processing device according to claim 1,
wherein the processor is configured to determine any one of a forward direction and a reverse direction as the traveling direction of the lane,
the forward direction is a direction identical to a movement direction of the vehicle, and
the reverse direction is a direction opposite to the movement direction of the vehicle.

5. The information processing device according to claim 4,
wherein the processor is configured to determine the reverse direction as the traveling direction of the lane in a case where the first accuracy of the external environment information is equal to or lower than a predetermined threshold.

6. The information processing device according to claim 1,
wherein the external environment information includes at least one of time information regarding a time when the external environment information is acquired or weather information, and
the processor is configured to determine the first accuracy by using at least one of the time information or the weather information.

7. The information processing device according to claim 1,
wherein the processor is configured to determine a travelable region which is a region where traveling of the vehicle is allowed, by using the traveling direction of the lane.

8. The information processing device according to claim 7,
wherein the processor is configured to
calculate a second accuracy indicating a level of precision of the traveling direction of the lane by using the first accuracy, and
determine the travelable region by using the second accuracy.

9. The information processing device according to claim 7,
wherein the processor is configured to store information regarding the travelable region in the memory, and
the processor is configured to
compare the travelable region determined at a current time point with the travelable region stored in the memory, and
update the travelable region stored in the memory.

10. An information processing system comprising:
the information processing device according to claim 1; and
at least one vehicle;
wherein the information processing device is configured to
receive the external environment information from the at least one vehicle.

11. The information processing system according to claim 10,
wherein the processor is configured to
determine a travelable region which is a region where traveling of the vehicle is allowed, by using the traveling direction of the lane, and
transmit information regarding the travelable region to the vehicle.

12. The information processing system according to claim 10,
wherein the external environment information includes a movement direction of an object traveling on the lane, and
the processor is configured to
determine the first accuracy for the movement direction of the object, and
determine the traveling direction of the lane by using the movement direction of the object and the first accuracy.

13. The information processing system according to claim 10,
wherein the external environment information includes dividing line information regarding a dividing line defining the lane,
the processor is configured to determine the traveling direction of the lane by using the dividing line information, and
the dividing line information includes at least one of a type of the dividing line, a color of the dividing line, or the number of lanes defined by the dividing line.

14. An information processing method comprising:
acquiring external environment information including at least information regarding a peripheral region of a vehicle; and
determining a traveling direction of at least one lane by using a first accuracy indicating a level of precision of the external environment information,
wherein the traveling direction of the lane is a traveling direction of the vehicle determined in advance for the lane.
